(19) **Europäisches Patentamt**

**European Patent Office**

**Office européen des brevets**

(11) **EP 0 982 270 A1**

(12) **EUROPEAN PATENT APPLICATION**

(43) Date of publication:
**01.03.2000 Bulletin 2000/09**

(51) Int. Cl.⁷: **C01F 7/00**, C08K 3/22,
C08K 3/26, C07F 5/06,
C08K 5/098

(21) Application number: **99202708.6**

(22) Date of filing: **23.08.1999**

(84) Designated Contracting States:
**AT BE CH CY DE DK ES FI FR GB GR IE IT LI LU
MC NL PT SE**
Designated Extension States:
**AL LT LV MK RO SI**

(30) Priority: **24.08.1998 NL 1009934**

(71) Applicant:
**AKCROS CHEMICALS V.O.F.
NL-6041 KV Roermond (NL)**

(72) Inventors:
• **Schmets, Gerard Hubert Frans
6085 AV Horn (NL)**

• **Peters, Frans Jeannette Maria Leonardus
6471 VH Eygelshoven (NL)**
• **Kroon, Erica Gertruda Arnolda
6071 VZ Swalmen (NL)**
• **Gielgens, Leo Hendrik
3511 GV Utrecht (NL)**
• **Fischer, Hartmut
5713 TP Mierlo (NL)**

(74) Representative: **De Hoop, Eric
Octrooibureau Vriesendorp & Gaade
P.O. Box 266
2501 AW Den Haag (NL)**

(54) **Anionic clays, stabilisers containing anionic clays, method for stabilising polymer compositions**

(57) The present invention relates to anionic clays which may be prepared by dissolving a zinc, magnesium, iron(II) or calcium salt of an organic acid in an alkaline aqueous solution and subsequently adding, at a temperature between 70 and 90°C, a carbonate compound, an inorganic aluminium, iron(III), chromium or cobalt compound and optionally one or more inorganic zinc, magnesium, calcium or iron(II) compounds, the trivalent metal cation being added separately and simultaneously with or after the other components, heating the reaction mixture and aging it, and filtering and drying the product. The invention further relates to the use of these anionic clays for stabilising polymers, in particular chlorine containing polymers or other polymers in which acidic residues are present.

EP 0 982 270 A1

**Description**

The present invention relates to anionic clays that are obtainable by means of controlled synthesis. The invention further relates to stabilisers containing these basically reacting clays. The invention also relates to a method for stabilising polymer compositions, in particular chlorine containing polymers, such as vinyl polymers, or other polymers in which acidic residues are present, such as polymers prepared through acid catalysis or polymers still containing acidic catalyst residues.

Organic plastics decompose to a larger or lesser extent at high temperatures, so also at the temperatures of processing plastics into plastic articles. This decomposition does not only result in unwanted discolourations, but also in a reduction of mechanical properties. Moreover the result is a reduction of the residual stability in the plastic article produced, which in its turn affects the durability of the article.

To prevent said decomposition or at least limit it to a minimum, adding stabilisers is necessary.

The anionic clays of the invention in particular serve to prevent discolourations and a reduction of mechanical properties associated therewith, and to prevent corrosion resulting from the presence of acidic substances in the processing of vinyl chloride based homo- and copolymers, of polymers that can be prepared through acid catalysis, and of polymers that may still contain acidic catalyst residues.

Stabilisers for halogen containing plastics have for some time been based on heavy metal compounds. And at the moment still not all applications can be achieved with stabilisers free of heavy metals, for instance PVC pipes of a large diameter.

Given the toxicity and environmental aspects of heavy metals one seeks to exclusively use stabilisers free of heavy metals.

EP-B 0 189 899 discloses stabiliser compositions comprising hydrotalcites containing two different bivalent cations and having a BET surface $\leq 30$ m$^2$/g and a particle size of approximately $\leq 5$ $\mu$m, preferably $\leq 2$ $\mu$m and more preferably $\leq 1$ $\mu$m. The hydrotalcites may be modified with higher fatty acid esters, surfactants, adhesives to improve the compatibility with the organic polymer matrix. The modification is carried out by mechanically admixing these additives.

EP-B 0 256 872 discloses the use of combinations of a hydrotalcite, a $\beta$-diketone or a zinc carboxylate to avoid discolouration and the use of MgO, which by reacting with the water and/or carbon dioxide being released should prevent the formation of bubbles in the processing of the polymer and in the further construction of the plastic articles, respectively, for instance when welding. The BET surface of the hydrotalcite has to be $\leq 50$ m$^2$/g and preferably $\leq 20$ m$^2$/g and the particle size has to be $\leq 5$ $\mu$m and preferably $\leq 1$ $\mu$m.

In DE 1592126 the preparation of hydrotalcites, using a variety of starting materials, such as emulsions of solid aluminium hydroxide, solid magnesium hydroxide and sodium carbonate, is described.

EP-A 0 052 331 discloses the use of mixed Mg/Al hydroxides with the purpose of reducing the corrosion of production machines, preventing the decomposition of the plastic articles and improving the thermal stability and the weather resistance. The BET surface after the preparation is about 100 m$^2$/g. A hydrothermal treatment, which is rather costly, is used to obtain particles with a BET surface of about < 40 m$^2$/g. The particle size has to be abuout 5 $\mu$m.

EP-A 0 807 086 discloses an economically favourable process for preparing hydrotalcites using alcoholates of bi- and trivalent metals. Compounds having a hydrotalcite structure are formed upon hydrolysis of these alcohols. Prior to or during said hydrolysis other water soluble salts of bi-or trivalent metals or anions, respectively, may be added to the reaction mixture.

WO 96/23611, WO 96/29282 and US 5,399,329 describe the preparation of Mg/Al hydrotalcites, containing a $C_1$-$C_5$ carboxylate, which may be added as the respective carboxylic acid or as the metal salts thereof. The Mg can be replaced by Zn up to a maximum of 50%.

These patent specifications explicitly state that the presence of a water soluble $C_1$-$C_5$ carboxylic acid is essential to the preparation of these hydrotalcites, which may range from 5-500 $\mu$m in particle size.

In US 4,843,169, US 4,774,212 and EP-B 0 536 879 carbonate free hydrotalcites are described, which may contain among others Mg and Zn as bivalent cations and Al as trivalent cation and an organic anion and which can be prepared by adding a solution of a salt of a bivalent metal and an aluminium salt to a solution of the organic acid or a salt thereof. By reacting with metal salts of voluminous anions, such as for instance B(OH)$^{4-}_4$ at a certain pH intercalated hydrotalcites are obtained, having a BET surface > 50 m$^2$/g, which may be used as catalysts, drying agents, adsorbents.

WO 96/04205 discloses the preparation of hydrotalcites having a uniform, spherical shape and relatively narrow particle size distribution, high porosity, large specific surface area by controlled process parameters, such as reaction temperature, stirring speed, pH, rate of adding the reactants and the concentration. The average spheroidal diameter is circa 45 $\mu$m and the diameter of the individual flat plates is 0.2-5 $\mu$m. Only the preparation of Mg/Al hydrotalcites is mentioned.

EP-B 0 394 670 describes the synthesis of dawsonites in a autoclave, wherein hydroxy carboxylic acids or their salts are added, which influence the crystal morphology. The salts of these hydroxy carboxylic acids are not described in detail. These products may be used as flame retardants.

US 4,476,324 and US 4,458,026 describe the preparation of hydrotalcites usable as catalysts, by adding a water soluble Mg and Al salt to an aqueous solution of sodium hydroxide and sodium carbonate at 25-35°C while stirring vigorously. The reaction mixture is then stirred for 18 hours at 60-75°C, followed by a thermal treatment to decompose the anion. Instead of the carbonate anion bivalent anions of dibasic carboxylic acids having 1-12 carbon atoms can be used.

An object of the invention is to provide new anionic clays which, when used as a component of stabilisers for polymers, in particular chlorine containing polymers, such as vinyl polymers, or other polymers in which acidic residues are present, such as polymers prepared through acid catalysis or polymers still containing acidic catalyst residues, ensure a better operation as regards the prevention of discolourations and the reduction of mechanical properties associated therewith, and the prevention of corrosion of processing machines.

It has now been found that anionic clays that are obtainable by using as one of the raw materials in the synthesis a salt of a bivalent metal cation and a monocarboxylic acid have better properties as stabilisers of halogen/chlorine containing polymers.

The invention provides anionic clays of the general formula

$$[M^{2+}_{2x} \ M^{3+}_2 \ (OH)_{4x+4} A_{2/n}^{n-} \cdot sH_2O] \, (RCOO^-)_q$$

in which $M^{2+}$ represents one or more bivalent metal cations selected from $Mg^{2+}$, $Zn^{2+}$, $Ca^{2+}$ and $Fe^{2+}$, $M^{3+}$ represents a trivalent metal cation selected from $Al^{3+}$, $Fe^{3+}$, $Co^{3+}$ and $Cr^{3+}$, A represents one of more inorganic anions, $RCOO^-$ represents a monocarboxylic moiety having 2-22 carbon atoms, in which R represents a cyclic, branched or linear, saturated or non-saturated alkyl group or an aryl group, $1.5<x<5$, $1<n<4$, $0<s<4$ and $0<q<4$, which are obtainable by a process comprising dissolving a zinc, magnesium, iron(II) or calcium salt of the monocarboxylic acid RCOOH in an alkaline aqueous solution and subsequently adding at a temperature between 70 and 90°C a carbonate compound, an inorganic aluminium, iron(III), chromium or cobalt compound and optionally one or more inorganic zinc, magnesium, calcium or iron(II) compounds, in solution or as a solid, provided that the trivalent metal cation is added separately and simultaneously with or after the other components, stirring the reaction mixture at increased temperature, aging in the mother liquor, filtering and drying the product separated by filtration at increased temperature.

The invention further provides a stabiliser for polymers, in particular chlorine containing polymers, such as vinyl polymers, or other polymers in which acidic residues are present, such as polymers prepared through acid catalysis or polymers still containing acidic catalyst residues, which stabiliser contains an anionic clay as described above.

The invention further provides a method for stabilising polymer compositions, in particular chlorine containing polymers, such as vinyl polymers, or other polymers in which acidic residues are present such as polymers prepared through acid catalysis, or polymers containing acidic catalyst residues, by including therein one or more anionic clays of the general formula

$$[M^{2+}_{2x} \ M^{3+}_2 \ (OH)_{4x+4} A_{2/n}^{n-} \cdot sH_2O] \, (Z)_q$$

in which $M^{2+}$ represents one or more bivalent metal cations selected from $Mg^{2+}$, $Zn^{2+}$, $Ca^{2+}$ and $Fe^{2+}$, $M^{3+}$ represents a trivalent metal cation selected from $Al^{3+}$, $Fe^{3+}$, $Co^{3+}$ and $Cr^{3+}$, A represents one of more inorganic anions, Z represents a monocarboxylic moiety $RCOO^-$ having 2-22 carbon atoms, in which R represents a cyclic, branched or linear, saturated or non-saturated alkyl group or an aryl group, or Z represents a dicarboxylic moiety $R'(COO^-)_2$ in which R' represents a bivalent aromatic moiety, $1.5<x<5$, $1<n<4$, $0<s<4$ and $0<q<4$, which are obtainable by a process comprising dissolving a zinc, magnesium, iron(II) or calcium salt of the carboxylic acid in an alkaline aqueous solution and subsequently adding at a temperature between 70 and 90°C a carbonate compound, an inorganic aluminium, iron(III), chromium or cobalt compound and optionally one or more inorganic zinc, magnesium, calcium or iron(II) compounds, in solution or as a solid, provided that the trivalent metal cation is added separately and simultaneously with or after the other components, stirring the reaction mixture at increased temperature, aging in the mother liquor, filtering and drying the product separated by filtration at increased temperature.

Non limiting examples of the acid RCOOH used in the preparation of the anionic clays according to the invention include fatty acids, such as oleic acid and stearic acid, branched aliphatic carboxylic acids such as α-ethyl hexanoic acid, versatic acid, and aromatic carboxylic acids such as p-tertbutylbenzoic acid. An example of a dicarboxylic acid is terephthalic acid.

The salt of the bivalent metal could both be neutral and basic. A preferred salt is basic zinc-α-ethyl hexanoate.

The order of adding the reactants is critical in that sense that the time of adding the inorganic compound of the trivalent metal is of importance because as soon as the trivalent cation contacts a bivalent cation a clay structure is already formed as a result of which the inclusion of other bivalent cations may be hindered. It is therefore necessary that the reactants are added simultaneously but separately or that the inorganic compound of the trivalent metal is added last. Further it has been found that the best results as regards the heat stability are obtained when separate solutions of the bivalent cation, of the carbonate ion and of the trivalent metal cation are added simultaneously in the correct ratios to the alkaline solution of the metal salt of the carboxylic acid.

The reactants may be added to the alkaline solution of the salt of the bivalent metal with the carboxylic acid both as a solid and in solution.

The concentration in the preparation of the anionic clays influences the stabilising properties. When using higher concentrations better results are obtained. The thermal stability is improved whereas the colour stability remains virtually the same. When using zinc-$\alpha$-ethyl hexanoate the total concentration, that is to say the total of all moles of the reactants per total volume used, is 0.7-1.4 mol/l, preferably 0.8-1.0 mol/l.

The temperature of the reaction during adding the reactants and during stirring the reaction mixture has to be between 70 and 90°C. Lower temperatures generally result in a reduced reactivity and poorer heat and colour stability. Higher temperatures do not further improve the heat and colour stability but entail higher costs of energy. The optimal temperature generally is about 85°C.

The bivalent metal cation added as a salt with the organic acid is completely incorporated in the crystal lattice. The organic anion is not incorporated but to a large extent is present on the surface of the clay particles.

If desired, the clays may be coated with for instance stearic acid. The coating may be carried out both before and after the aging. The coating improves the storage life of the clays. The coating ensures a better Congo red value and as a result a higher residual stability.

The anionic clays of the invention have better stabilising properties than clays that have been prepared by using an inorganic compound of a bivalent metal and a monocarboxylic acid instead of the salt of the bivalent metal and the monocarboxylic acid.

The particles of the clays of the invention are generally rather large and consequently their tendency to cluster is reduced as a result of which less light diffusion takes place and a better colour stability is obtained.

In general a thermal post-treatment in an aqueous solution under pressure at increased temperature is often performed on anionic clays in order to obtain suitable particles and therefore good application properties. Furthermore air separation is used to obtain fractions of larger and smaller particles. When using the anionic clays according to the invention both treatments may be omitted. As a result the preparation is simpler and cheaper and the loss of material is reduced.

The invention will now be illustrated referring to the following examples. The stabilising properties of the clays obtained were assessed in the following manner.

Polymer compositions were prepared by mixing:

| | |
|---|---|
| S-PVC (K-68) | : 3000 g |
| Acrylate compound | : 60-450 g |
| Chalk (coated) | : 60-360 g |
| Titanium dioxide | : 30-300 g |
| Acrylate ester homopolymer | : 30-300 g |
| Polyols | : 12-20 g |
| Calcium-zinc stabiliser | : 3-150 g |
| $\beta$-diketone | : 4-12 g |
| Anionic clay | : 1-60 g |
| Organic diphosphite | : 1-60 g |
| Lactone | : 1-60 g |

in a Papenmeier Type THK-8 up to a temperature of 110°C. The dry blend thus formed is further processed after cooling. By means of calendering at 195°C sheets having a thickness of 0.5 mm were formed from the polymer compositions. Test pieces of 2.5 x 2.5 cm were cut from the sheets. The heat stability at 200°C (HST) of the test pieces was determined according to Werner Mathis. A HST ≥ 63 minutes is considered acceptable.

Furthermore the initial colour of the test pieces was assessed using a Minolta Chromameter with a DP 301 Data processor. The measurement is carried out according to DIN Standard 6174 CIE Lab System. The yellowness is assessed according to ASTM Method D 1925.

The initial colour is expressed as a Wb value (% Wb). In this description the initial colour of the test pieces made from the PVC compositions containing the anionic clays of the invention is compared to that of compositions containing the product Alcamizer 4 (Kyowa Chemical Industry). This standard component usually has a Wb value of ± 60%. In the following this Wb value is set at 100% and all other measured values are correlated thereto. A Wb ≥ 92% is considered acceptable.

Further the residual stability after processing of the polymer compositions prepared with the clays of the invention was assessed, this stability being expressed as Congo red value determined according to the method described in ISO 182-1:1990 (E).

The particle size of a number of anionic clays according to the invention was determined using a Malvern Mastersizer.

Example 1

Preparation of Mg-Zn-Al clay

In a 1 l beaker 38.4 g basic zinc-$\alpha$-ethyl hexanoate (Lankromark LZ-1122 available from Akcros Chemicals Eccles) and a solution of 18 g sodium hydroxide (NaOH) were mixed in 600 ml of water for 30 minutes while stirring and increasing the temperature to 85°C.

Subsequently the following solutions were added simultaneously but separately at 85°C over a period of 90 minutes:

Solution I: 63.5 g sodium carbonate ($Na_2CO_3$) in 300 ml of water.
Solution II: 62.1 g magnesium chloride ($MgCl_2$. $6H_2O$) in 200 ml of water.
Solution III: 17.3 g sodium aluminate ($NaAlO_2$) in 200 ml of water.

Then the reaction mixture was stirred at 85°C for 4 hours and subsequently aged in the mother liquor at room temperature for 16 hours.

Finally the reaction mixture was heated to 50°C and filtered, the filter cake was washed free of chloride with 1 l of water and the filtered product was dried at 110°C for 10 hours. Yield 61.4 g.

The particle size of the product and the properties of PVC stabilised with the product are included in Table 2 below.

Example 2

A Mg-Al-Zn clay was prepared in the same manner as in example 1 except that the product was coated with about 7 % by weight of stearic acid (1 hour at 95 °C) after aging of the dispersion, then filtered hot (90°C), washed and dried (10 hours at 105°C). Yield 60 g.

The particle size of this product and the properties of PVC stabilised therewith are presented in Table 2 below.

Comparative example 1

This example describes an anionic clay not according to the invention prepared by using ZnO and $\alpha$-ethyl hexanoic acid instead of basic Zn-$\alpha$-ethyl hexanoate. 4.9 g ZnO and 7.2 g $\alpha$-ethyl hexanoic acid were mixed with a solution of 6 g NaOH in 600 ml of water at 85°C for 1 hour. Subsequently the method of example 1 was followed. Yield: 35 g.

The particle size of this product and the properties of PVC stabilised with this product are presented in Table 2 below.

Comparative example 2

A Mg-Al-Zn clay was prepared in the same manner as in comparative example 1 except that the dispersion in the mother liquor was coated with 5% stearic acid according to the procedure of example 2.

Example 3

The method of example 1 was repeated except that first separate solutions of sodium carbonate and magnesium chloride were simultaneously added to the zinc-$\alpha$-ethyl hexanoate solution, and a solution of $NaAlO_2$ was added after about 1 hour of stirring.

The particle size of this clay and the properties of the PVC stabilised with this product are presented in Table 2 below.

Example 4

Preparation of a Mg-Al clay.

In a 1 l beaker 40 g Mg-α-ethyl hexanoate and a solution of 24 g sodium hydroxide were mixed in 400 ml of water while stirring at 70°C for 30 minutes.
Subsequently the following solutions were added simultaneously but separately at 70°C over a period of 90 minutes:

Solution I: 35.7 g sodium carbonate in 200 ml of water.
Solution II: 3.3 g sodium aluminate in 100 ml of water.

Subsequently the reaction mixture was stirred at 70°C for 3 hours. After adding 2 g of stearic acid the mixture was stirred for 1 hour. Subsequently the mixture was aged at 110°C for 15 hours and filtered. The filter cake was dried at 105°C for 10 hours. Yield 15.1 g.
The particle size of this clay and the properties of PVC stabilised therewith are presented in Table 2 below.

Examples 5-10 and comparative examples 3 and 4

Coated and uncoated Mg-Al-Zn clays were prepared according to the methods of example 1 and 2, the conditions and the raw materials being varied in the manner presented in Table 1.
The particle size of the anionic clays obtained and the properties of PVC stabilised with these anionic clays are presented in Table 2.

Table 1
Preparation of anionic clays

| Example No. | Temperature (°C) Mixing and stirring | Total concentration [mol/l] | Organic metal salt/acid | Inorganic metal salts | Carbonate source |
|---|---|---|---|---|---|
| 5 | 80 | 0.97 | zinc-$\alpha$-ethyl hexanoate | $ZnO$;$MgCl_2$;$NaAlO_2$ | Basic $ZnCO_3$; basic $MgCO_3$; $Na_2CO_3$ |
| 6 | 70 | 0.97 | --- | $ZnO$; $NaAlO_2$ | basic $MgCO_3$; $Na_2CO_3$ |
| 7 | 85 | 1.16 | zinc-$\alpha$-ethyl hexanoate | $MgCl_2$;$NaAlO_2$ | $Na_2CO_3$ |
| 8 | 70 | 0.96 | zinc-$\alpha$-ethyl hexanoate | $NaAlO_2$ | basic $MgCO_3$; $Na_2CO_3$ |
| 9 | 85 | 1.86 | Zinc-terephthalate | $Ca(OH)_2$; $MgCl_2$; $NaAlO_2$ | $Na_2CO_3$ |
| Comp. 3 | 85 | 0.72 | Terephthalic acid | $ZnO$; $Ca(OH)_2$; $MgCl_2$; $NaAlO_2$ | $Na_2CO_3$ |
| 10 | 85 | 0.78 | Zinc (p-tbb)$_2$ | $Ca(OH)_2$; $MgCl_2$; $NaAlO_2$ | $Na_2CO_3$ |
| Comp. 4 | 85 | 0.87 | p-tbb[*] | $Ca(OH)_2$; $MgCl_2$; $NaAlO_2$; $ZnO$ | $Na_2CO_3$ |

[*] = p-tert-butyl benzoic acid

EP 0 982 270 A1

EP 0 982 270 A1

Table 2
Properties of anionic clays and PVC stabilised therewith

| Example No. | Average particle size (μm) | Heat stability (200°C) (minutes) | Initial colour (Wb%) | Congo red value (200°C) (minutes) | Stearic coating (%) |
|---|---|---|---|---|---|
| Alc.4 * | 2.7 | 70 | 100 | 47:50 | ± 8 |
| 1 | 28.8 | 68 | 94 | 36:47 | 0 |
| 2 | 25.3 | 81 | 94 | 45:11 | 7.5 |
| Comp. 1 | 21.5 | 56 | 92 | 36:30 | 5.7 |
| Comp. 2 | -- | 57 | 89 | --- | 10.3 |
| 3 | 11.5 | 72 | 92 | 43:57 | 7.9 |
| Alc. 1 ** | 1.5 | 67 | 80 | 39:30 | > 0 *** |
| 4 | 23.2 | 63 | 61 | 40:41 | 13.2 |
| 5 | 7.8 | 65 | 95 | 40:00 | 0 |
| 6 | 9.5 | 67 | 89 | 38:35 | 4.7 |
| 7 | 12.7 | 65 | 95 | 39:43 | 0 |
| 8 | 12.1 | 65 | 102 | 42:45 | 5.5 |
| 9 | 7.0 | 74 | 99 | 43:37 | 8.2 |
| Comp. 3 | 7.9 | 67 | 102 | 42:00 | 7.4 |
| 10 | 9.6 | 64 | 102 | 39:29 | 7.7 |
| Comp. 4 | 15.4 | 64 | 102 | 39:57 | 7.5 |

\*       Alcamizer 4, product of Kyowa Chemical Industry
\* \*     Alcamizer 1, product of Kyowa Chemical Industry
\* \* \*   Coated with a not further determined quantity of stearic acid

**Claims**

1. Anionic clays of the general formula

$$[M_{2x}^{2+}\ M_2^{3+}\ (OH)_{4x+4}A_{2/n}^{n-} \cdot sH_2O]\ (RCOO^-)_{q,}$$

in which $M^{2+}$ represents one or more bivalent metal cations selected from $Mg^{2+}$, $Zn^{2+}$, $Ca^{2+}$ and $Fe^{2+}$, $M^{3+}$ represents a trivalent metal cation selected from $Al^{3+}$, $Fe^{3+}$, $Co^{3+}$ and $Cr^{3+}$, A represents one of more inorganic anions, $RCOO^-$ represents a monocarboxylic moiety having 2-22 carbon atoms, in which R represents a cyclic, branched or linear, saturated or non-saturated alkyl group or an aryl group, $1.5<x<5$, $1<n<4$, $0<s<4$ and $0<q<4$, which are obtainable by a process comprising dissolving a zinc, magnesium, iron(II) or calcium salt of the monocarboxylic acid RCOOH in an alkaline aqueous solution and subsequently adding at a temperature between 70 and 90°C a carbonate compound, an inorganic aluminium, iron(III), chromium or cobalt compound and optionally one or more inorganic zinc, magnesium, calcium or iron(II) compounds, in solution or as a solid, provided that the trivalent metal cation is added separately and simultaneously with or after the other components, stirring the reaction mixture at increased temperature, in the mother liquor, filtering and drying the product separated by filtration at increased temperature.

2. An anionic clay according to claim 1, **characterized in that** the salt of a monocarboxylic acid used in the preparation of the clay is a salt of α-ethyl hexanoic acid.

3. An anionic clay according to claim 2, **characterized in that** the salt of a monocarboxylic acid is zinc-α-ethyl hexanoate.

4. An anionic clay according to claim 3, **characterized in that** as bivalent metal cation in addition to $Zn^{2+}$ $Mg^{2+}$ is present and that the trivalent metal cation is $Al^{3+}$.

5. An anionic clay according to any one of the claims 1-4, **characterized in that** the clay particles are coated.

6. An anionic clay according to claim 5, **characterized in that** the particles are coated with stearic acid.

7. A stabiliser for polymers, in particular chlorine containing polymers, such as vinyl polymers, or other polymers in which acidic residues are present, such as polymers prepared through acid catalysis, or polymers containing acidic catalyst residues, containing one or more anionic clays according to any one of the claims 1-6.

8. A method for stabilising polymer compositions, in particular chlorine containing polymers, such as vinyl polymers, or other polymers in which acidic residues are present such as polymers prepared through acid catalysis or polymers containing acidic catalyst residues, by including therein one or more anionic clays of the general formula

$$[M_{2x}^{2+}\ M_2^{3+}\ (OH)_{4x+4}A_{2/n}^{n-} \cdot sH_2O]\ (Z)_q$$

in which $M^{2+}$ represents one or more bivalent metal cations selected from $Mg^{2+}$, $Zn^{2+}$, $Ca^{2+}$ and $Fe^{2+}$, $M^{3+}$ represents a trivalent metal cation selected from $Al^{3+}$, $Fe^{3+}$, $Co^{3+}$ and $Cr^{3+}$, A represents one of more inorganic anions, Z represents a monocarboxylic moiety $RCOO^-$ having 2-22 carbon atoms, in which R represents a cyclic, branched or linear, saturated or non-saturated alkyl group or an aryl group, or Z represents a dicarboxylic moiety $R'(COO^-)_2$ in which R' represents a bivalent aromatic moiety, $1.5<x<5$, $1<n<4$, $0<s<4$ and $0<q<4$, which are obtainable by a process comprising dissolving a zinc, magnesium, iron(II) or calcium salt of the monocarboxylic acid in an alkaline aqueous solution and subsequently adding at a temperature between 70 and 90°C a carbonate compound, an inorganic aluminium, iron(III), chromium or cobalt compound and optionally one or more inorganic zinc, magnesium, calcium or iron(II) compounds, in solution or as a solid, provided that the trivalent metal cation is added separately and simultaneously with or after the other components, stirring the reaction mixture at increased temperature, aging in the mother liquor, filtering and drying the product separated by filtration at increased temperature.

9. A polymer composition containing as stabiliser component one or more anionic clays according to any one of the claims 1-6.

**European Patent Office**

**EUROPEAN SEARCH REPORT**

Application Number

EP 99 20 2708

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 351 814 A (MIYATA SHIGEO ET AL) 28 September 1982 (1982-09-28) * page 2, line 33 - line 56; claims 1-4 * | 1,4,8 | C01F7/00 C08K3/22 C08K3/26 C07F5/06 C08K5/098 |
| Y | | 7-9 | |
| D,X | EP 0 095 783 A (UNION CARBIDE CORP) 7 December 1983 (1983-12-07) * claims 1,9,13 * | 1,4 | |
| Y | | 7-9 | |
| D,X | WO 96 23611 A (ARISTECH CHEMICAL CORP) 8 August 1996 (1996-08-08) * page 10, line 12 - line 23; claims * | 1,2,4 | |
| Y | | 7-9 | |
| A | US 5 728 366 A (HORN JR WILLIAM E ET AL) 17 March 1998 (1998-03-17) * the whole document * | 1-6 | |
| Y | WO 92 20619 A (HENKEL KGAA) 26 November 1992 (1992-11-26) * the whole document * | 7-9 | |
| Y | EP 0 256 872 A (KYOWA CHEM IND CO LTD) 24 February 1988 (1988-02-24) * the whole document * | 7-9 | TECHNICAL FIELDS SEARCHED (Int.Cl.7) C01F C08K C07F |
| A | WO 96 19529 A (REHEIS INC) 27 June 1996 (1996-06-27) | | |

The present search report has been drawn up for all claims

| Place of search | Date of completion of the search | Examiner |
|---|---|---|
| THE HAGUE | 29 November 1999 | Zalm, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 0 982 270 A1**

## ANNEX TO THE EUROPEAN SEARCH REPORT
## ON EUROPEAN PATENT APPLICATION NO.

EP 99 20 2708

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-1999

| Patent document cited in search report | | Publication date | Patent family member(s) | | Publication date |
|---|---|---|---|---|---|
| US 4351814 | A | 28-09-1982 | NONE | | |
| EP 0095783 | A | 07-12-1983 | US | 4476324 A | 09-10-1984 |
| | | | CA | 1203071 A | 15-04-1986 |
| | | | JP | 1634409 C | 20-01-1992 |
| | | | JP | 2060376 B | 17-12-1990 |
| | | | JP | 58219139 A | 20-12-1983 |
| | | | US | 4458026 A | 03-07-1984 |
| WO 9623611 | A | 08-08-1996 | US | 5507980 A | 16-04-1996 |
| | | | CA | 2186525 A | 08-08-1996 |
| | | | EP | 0790872 A | 27-08-1997 |
| | | | JP | 9511211 T | 11-11-1997 |
| US 5728366 | A | 17-03-1998 | US | 5514361 A | 07-05-1996 |
| | | | AT | 186281 T | 15-11-1999 |
| | | | AU | 704214 B | 15-04-1999 |
| | | | AU | 1559395 A | 07-03-1996 |
| | | | BR | 9508872 A | 06-01-1998 |
| | | | CA | 2197664 A | 22-02-1996 |
| | | | EP | 0776317 A | 04-06-1997 |
| | | | HU | 77873 A | 28-09-1998 |
| | | | JP | 10503465 T | 31-03-1998 |
| | | | SK | 21197 A | 10-12-1997 |
| | | | WO | 9605140 A | 22-02-1996 |
| | | | US | 5578286 A | 26-11-1996 |
| | | | US | 5728363 A | 17-03-1998 |
| | | | US | 5776424 A | 07-07-1998 |
| | | | US | 5728364 A | 17-03-1998 |
| | | | US | 5728365 A | 17-03-1998 |
| | | | US | 5730951 A | 24-03-1998 |
| | | | AU | 708168 B | 29-07-1999 |
| | | | AU | 1559495 A | 29-11-1995 |
| | | | BR | 9507557 A | 05-08-1997 |
| | | | CA | 2189020 A | 09-11-1995 |
| | | | CZ | 9603162 A | 16-04-1997 |
| | | | EP | 0759888 A | 05-03-1997 |
| | | | HU | 75979 A | 28-05-1997 |
| | | | JP | 9512519 T | 16-12-1997 |
| | | | SK | 139596 A | 06-08-1997 |
| | | | WO | 9529874 A | 09-11-1995 |
| WO 9220619 | A | 26-11-1992 | DE | 4117034 A | 26-11-1992 |
| | | | AT | 142984 T | 15-10-1996 |
| | | | DE | 59207199 D | 24-10-1996 |
| | | | EP | 0586446 A | 16-03-1994 |

EPO FORM P0459

For more details about this annex : see Official Journal of the European Patent Office, No. 12/82

11

## ANNEX TO THE EUROPEAN SEARCH REPORT
## ON EUROPEAN PATENT APPLICATION NO.

EP 99 20 2708

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-1999

| Patent document cited in search report | | Publication date | Patent family member(s) | | Publication date |
|---|---|---|---|---|---|
| WO 9220619 | A | | JP | 6507599 T | 01-09-1994 |
| | | | US | 5416135 A | 16-05-1995 |
| EP 0256872 | A | 24-02-1988 | JP | 1909198 C | 09-03-1995 |
| | | | JP | 6039560 B | 25-05-1994 |
| | | | JP | 63046248 A | 27-02-1988 |
| | | | DE | 3774209 A | 05-12-1991 |
| | | | US | 4751261 A | 14-06-1988 |
| WO 9619529 | A | 27-06-1996 | AU | 707027 B | 01-07-1999 |
| | | | AU | 4412796 A | 10-07-1996 |
| | | | CA | 2208423 A | 27-06-1996 |
| | | | EP | 0799276 A | 08-10-1997 |
| | | | JP | 11502189 T | 23-02-1999 |

EPO FORM P0459

For more details about this annex : see Official Journal of the European Patent Office, No. 12/82